# EUROPEAN PATENT APPLICATION

(11) **EP 1 515 302 A1**
(43) Date of publication of application: **16.03.2005**
(21) Application number: 04104324.1
(22) Date of filing: 08.09.2004
(51) Int. Cl.: G10H 1/00

(54) **A method of adaptively inserting non-audio data into an audio bit-stream and apparatus therefor**

(30) Priority: 09.09.2003 KR 2003063361
(71) Applicant: Samsung Electronics Co., Ltd., Suwon-si, Gyeonggi-Do 442-742 (KR)
(72) Inventor: Manish, Arora, Suwon-si, Gyeonggi-do (KR)
(74) Representative: Read, Matthew Charles

(57) **Abstract**

A method for adaptively inserting karaoke information into an audio signal, a method for reproducing the inserted karaoke information and an apparatus therefore, and a recording medium on which programs are recorded for realizing the same. The method of adaptively inserting additional information into input audio data includes inserting karaoke information into input audio data in sub-audio block units that have a predetermined length, and wherein the karaoke information includes duration information and karaoke data and the duration information indicates the range of the sub-audio block in which the karaoke information is inserted.

## Description

Methods and apparatuses consistent with the present invention relate to utilizing karaoke from information recorded on an audio CD and a method of using the same, and more particularly to a method of inserting karaoke information into audio data and a method of reproducing audio data in which karaoke information is inserted.

During the past 20 years, much progress has been made in systems and equipment for karaoke. Karaoke used analogue tapes during the early 1980s. The problem with analogue tapes was that they were unable to immediately locate the beginning of a song. The development of CD technology solved this problem and also allowed video scenes to be included with the music creating a suitable backdrop for each song. Other technological advances such as video discs, laser discs, and CD graphics, has enabled karaoke to grow to be a major entertainment industry.

The most popular format of storage used for karaoke is the CD+G format. The CD+G format is a standard audio CD format with graphic commands added to a normally unused sub-code area of the audio CD. A CD+G player reads the stored graphics as the audio is played enabling the display and highlighting of lyrics or the display of simple logos or images. However, a disadvantage of this known method is that in order to decode CD+G, a specialized player is required.

The most popular file format for computer-based karaoke is the karaoke MIDI format (KMF). This format combines a MIDI (Musical Instrument Digital Interface) and lyric data so that a user can sing along to a karaoke track on a computer. Also, there is the CD+MIDI computer disc format which is similar to the CD+G format.

Compact discs have been used since 1982. Optical discs are compact and reliable not only for audio but for other applications as well. Even though DVDs have become popular, CDs are still widely used for audio. Early audio CDs were designed to store about one hour of high quality, stereo audio. However, CDs now can store about 80 minutes of high quality stereo audio. The audio is stored digitally so that noise, which is associated with vinyl and cassettes, is virtually non-existent. In addition, a CD will not be worn out by use.

In 1984, a CD-ROM standard enabling computer data storage was standardized. Various formats including CD-ROM XA, CD-1, improved CD, and video CD have since been proposed. These compact discs are physically the same as audio CDs. However, the compact discs used for storage of computer data can store text, images, and video data. These multi media discs have a disc format which can be read by specific hardware for example personal computers and video games. These CDs are used to store video games, video, educational programs, and encyclopedias.

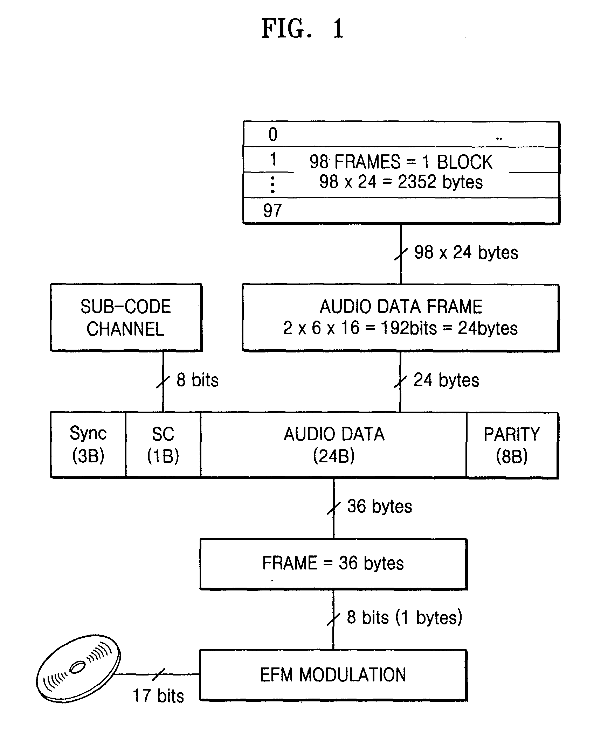

Figure 1 illustrates a known audio CD data storage format.

A method of storing data on an audio CD will be described referring to Figure 1.

When recording audio data as pits in a disc, the audio data is divided into six samples per channel, this means groups of 192 bits (6X2X16) or 24 bytes. Then, a four-byte sub-code channel and eight-byte cross-interleaved Reed-Solomon code (CIRC) parity data is added to the divided audio data shown in Figure 1, thus forming a frame of 36 bytes. One block of recorded audio data is composed of 98 audio frames. Figure 1 illustrates such an audio CD data storage format.

Each block is composed of 2352 bytes and 75 blocks per second are read from the CD at normal speed. Therefore, discs that store 74 minutes worth of data can store 333,000 blocks (74X60X75).

A 36-byte frame is composed of 3-bytes of synchronization data, one-byte of sub-code data, 24-bytes of audio data indicating six samples of the respective stereo channels, and eight-bytes for CIRC error correction. This data is interleaved with the audio data within the blocks.

In the CIRC method, two dimensional parity information bits are added to correct for errors, and data is interleaved on the disc to protect the data from burst errors. Burst errors up to a maximum of 3500 bits (2.4mm) are corrected using the CIRC method. This is sufficient to protect up to 12,000 bits (8.5mm) of burst error data which can be created by a slight scratch. CD-ROM discs generally implement an additional error protection method.

An example of an additional error protection method is the eight to fourteen modulation (EFM) method. This method modulates each eight-bit symbol into 14 bits + 3 merging bits, thus, 17 bits. EFM is used to limit the number of 0 to 1 and 1 to 0 transitions on the disc. The pit and land length of parts of the modulated symbol bit should be larger than 3 bits and less than 11 bits. In other words, there should be at least 3, but less than 11 bits between consecutive transitions on a disc. This reduces distortion related to jitter and also error rate. A P-channel indicates the start and end of each track and is a channel used by known audio players, which do not decode an entire Q channel. The Q-channel includes time code information including minutes, seconds, and frames, table of contents (TOC) of a lead in area, track type, and catalogue number. Channels R to W are sub-codes for storing CD text and/or graphics. This is known as CD-G.

When CDs were first developed, the sub-codes were used to store control data for the disc. The main channel was for only audio data, and was not used for other types of data. Later on, the main channel started to be used for other types of data, and a new DVD standard omitted the sub-code channels used in CDs.

CD graphics are an extension of CD audio and includes data regarding graphics and text. This enables the addition of very simple CD-ROM features to a typical CD audio disc.

The data storing mechanism used on an audio CD will be described below. Graphics and text can be displayed while reproducing audio, while additional data, which can be included in sub-code channels R to W, account for only 3% of the total capacity of a typical CD-ROM. The maximum data rate that can be used for each of sub channels R to W is 5.4 KB/s. Data in sub channels R to W is protected by the Reed-Solomon error correction code like the audio data stored in the main channel.

Karaoke uses CD-G. CD-G karaoke equipment containing a CD audio player can also be used. However, such equipment requires three additional television sets to display the lyrics of the song. Moreover, a specialized sub-code region is required to replay CD-G encoded on a CD-ROM. CD-G defines two additional modes, which are a musical instrument digital interface (MIDI) and a user mode.

The MIDI mode provides a maximum data channel of 3.125kb/s for the MIDI data according to the regulations set out by the international MIDI association. The user mode is reserved for professional applications. However, in order to play karaoke using the CD-G format, a specialized player is required.

Provided is an apparatus and a method for adaptively inserting karaoke information into an audio signal to realize karaoke on existing audio players and to realize karaoke within the range in which listeners do not perceive deterioration in the sound quality of the audio signal.

Also provided are an apparatus and a method for obtaining karaoke from information recorded on an audio CD and a method of using the same.

According to an exemplary embodiment of the present invention, there is provided a method of adaptively inserting karaoke information into input audio data including inserting karaoke information into input audio data in sub-audio block units having predetermined lengths, wherein the karaoke information comprises duration information and karaoke data, and the duration information indicates the range of the sub-audio blocks in which the karaoke information is inserted.

According to another exemplary embodiment of the present invention, there is provided a computer readable recording medium storing a program for inserting karaoke information into input audio data, the program including inserting karaoke information into input audio data in sub-audio block units having predetermined lengths, and wherein the karaoke information comprises duration information and karaoke data, and the duration information indicates the range of sub-audio blocks in which the karaoke information is inserted.

According to another exemplary embodiment of the present invention, there is provided an apparatus for inserting karaoke information into input audio data including a karaoke information insertion unit, which inserts karaoke information into the input audio data in sub-audio block units having predetermined lengths wherein the karaoke information comprises duration information and karaoke data and the duration information indicates the range of the sub-audio block in which the karaoke information is inserted.

According to another exemplary embodiment of the present invention, there is provided a method of reproducing karaoke information inserted into input audio data information, including detecting synchronization information from the input audio data, extracting duration information by sub-audio block units with predetermined lengths when the detected synchronization information is valid, and extracting karaoke data from the sub-audio block based on the extracted duration information, wherein the karaoke information comprises the duration information and the karaoke data and the duration information indicates the range of the sub-audio blocks in which the karaoke information is inserted

According to another exemplary embodiment of the present invention, there is provided a computer readable recording medium storing a program for reproducing karaoke information inserted into input audio data, the program includes extracting synchronization information from input audio data, extracting duration information in sub-audio block units having predetermined lengths when the extracted synchronization information is valid, and extracting karaoke data from the sub-audio block based on the extracted duration information, wherein the karaoke information comprises the duration information and the karaoke data and the duration information indicates the range of sub-audio block in which the karaoke information is inserted.

According to another exemplary embodiment of the present invention, there is provided an apparatus for reproducing karaoke information inserted into input audio data including a synchronization detection unit, which detects synchronization information from the input audio data, and a karaoke information detection unit which extracts duration information in sub-audio block units having a predetermined length and extracts karaoke data from the sub-audio block based on the extracted duration information when the detected synchronization information is valid, wherein the karaoke information includes the duration information and the karaoke data, and the duration information indicates the range of the sub-audio block in which the karaoke information is included.

An embodiment of the present invention will now be described, by way of example only, with reference to Figures 2 - 12 of the accompanying drawings, in which:
Figure 1 illustrates a known audio CD data storage format;
Figure 2 illustrates a bit-robbing method according to an embodiment of the present invention;
Figure 3 is a block diagram illustrating an apparatus for adaptively inserting karaoke information according to an embodiment of the present invention;
Figure 4 illustrates a structure of a lyrics data packet generated by the apparatus of Figure 3;
Figure 5 illustrates a structure of an MIDM data generated by the apparatus of Figure 3;
Figure 6 is a block diagram of a scrambler of a data packet randomization unit within the apparatus of Figure 3;
Figure 7 is a flow chart illustrating a method of adaptively inserting karaoke information according to an embodiment of the present invention;
Figure 8 is a block diagram illustrating a karaoke information-reproducing device according to an embodiment of the present invention;
Figure 9 is a block diagram of a descrambler of a synchronization information detection unit of Figure 8;
Figure 10 is a flow chart illustrating a method of reproducing karaoke information according to an embodiment of the present invention;
Figure 11 is a block diagram illustrating a karaoke information reproducing device according to another embodiment of the present invention; and
Figure 12 is a flow chart illustrating a method of reproducing karaoke information according to another embodiment of the present invention.

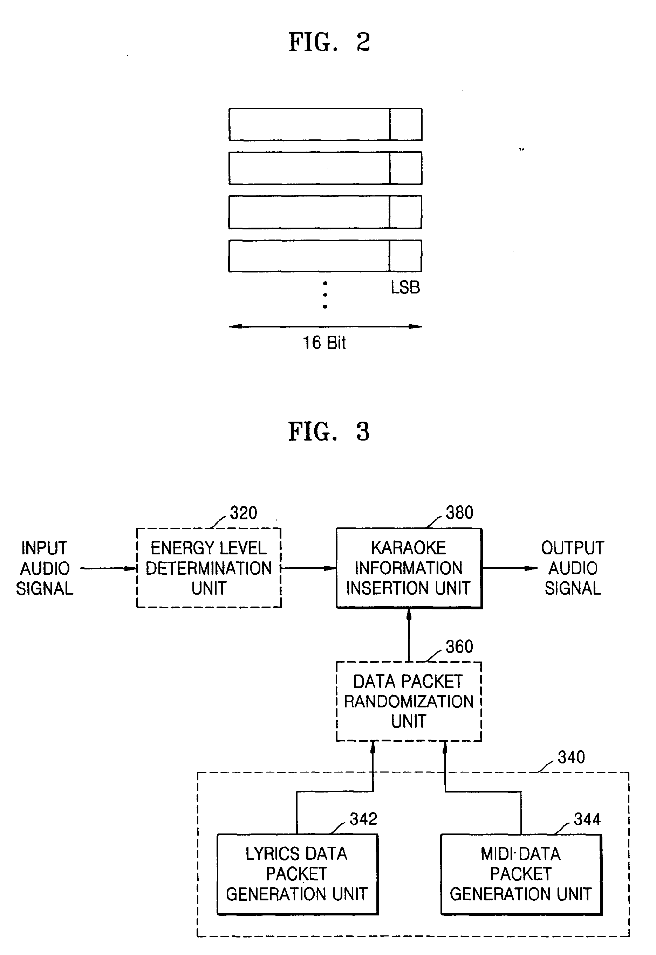

Referring to Figure 2, a bit-robbing method is used to insert MIDI information such as lyrics and/or karaoke information into an audio data sample. In this embodiment, the audio data is pulse code modulated. As will be appreciated, in pulse code modulation (PCM), a least significant bit (LSB) of the audio sample has a negligible effect on the sound quality. Therefore, even with a change in the least significant one or two bits of the PCM sample (shown in Figure 2), there is no perceptible deteriation of sound quality..

Referring to Figure 3, an encoder includes an energy level determination unit 320, a karaoke information data packet-generation unit 340, and a karaoke information insertion unit 380. The karaoke information data packet-generation unit 340 includes a lyrics data packet-generation unit 342 and an MIDI data packet-generation unit 344. However, when the pattern of the karaoke information to be inserted is known by the encoder and a corresponding decoder, the energy level determination unit 320 may be omitted.

The energy level determination unit 320 calculates the energy of the input audio signal. This is done in audio blocks having a predetermined length. According to this embodiment, the length of the audio block is 30-50 msec. A block length determination unit (not shown) can be included to adaptively determine an appropriate audio block length in accordance with the characteristics of the input audio signal.

The calculated energy of an audio block is compared with a predetermined threshold value so that the energy level of the input audio signal is determined. In this embodiment, the energy level of the audio block is classified into low, intermediate, or high when compared to a first reference value and a second reference value.

In this embodiment, the number of bits of karaoke information to be inserted into the audio data sample is determined according to the energy of the input audio signal calculated by the energy level determination unit 320.

For example, when the energy of the input audio signal is lower than the first reference value, or the energy is classified as low, the signal cannot mask the noise generated by changing the lowest significant bit of the audio data sample, or to put it another way, to insert a bit-robbing bit. Therefore, karaoke information is not inserted into the data stream. This is because the listener will perceive the noise generated by inserting the bit.

When the energy of the audio block is larger than the first reference value but smaller than the second reference value, or when the energy is classified as an intermediate level, one least significant bit (LSB) is used to insert the karaoke information because the noise caused by the bit-robbing bit is masked. Thus, in this embodiment, karaoke information is inserted into the least significant bit of a PCM sample when the energy level is classified as being at an intermediate level as shown in Figure 2.

When the energy of the audio block is greater than the second reference value, or when the energy level is classified as high, karaoke information is inserted using the two LSB bits per PCM sample as shown in Figure 2 because the noise generated will not be perceptible to the listener.

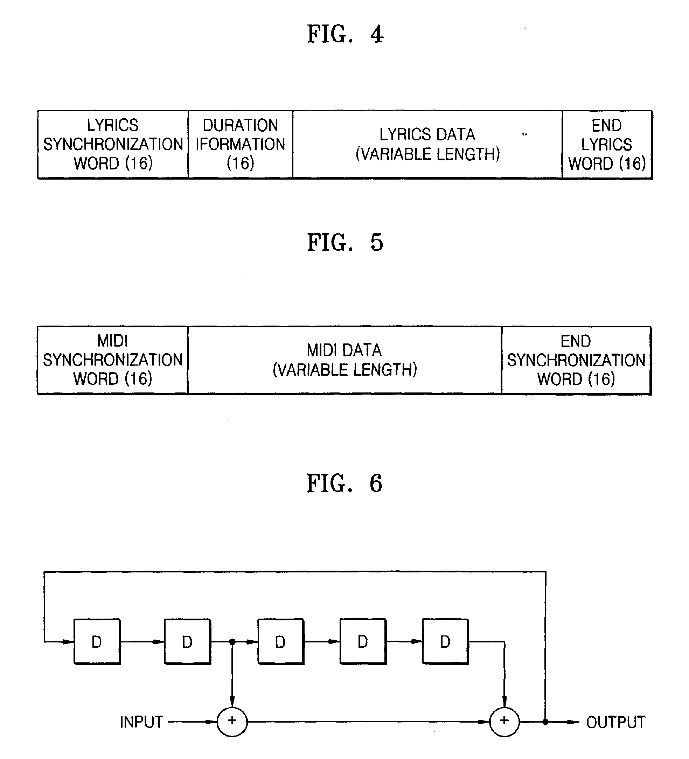

Alternatively, as will be mentioned with reference to Figure 4, by using duration information, which indicates the duration of the karaoke information to be inserted, it is possible to omit the process of calculating the energy of the audio block in the encoder and the decoder.

It may be required to adaptively determine the location and number of the bit-robbing bits so that the modified PCM samples, which are modified in the bit-robbing method, are similar to the original PCM samples thus reducing noise.

For the intermediate and high energy levels, even when changing one or two bits respectively, noise deterioration due to the changing of the bit(s) is barely perceived. This is because the karaoke information data packet uses 5% to 10% of the common audio bit stream.

For example, when assuming one bit of the original PCM sample is bit-robbed for 5% of the time and two bits are bit-robbed for 3% of the time, the number of bits that are available for bit-robbing is 9702 bits per second, that is (5 x 1 x 44100 x 2 + 3 x 2 x 44100 x 2)/100. These robbed bits can be applied to various applications not just karaoke information.

Karaoke data is inserted in the form of a data packet, which can be classified into two types. One type is for lyric data and the other is a karaoke midi format (KMF) packet. Lyric data packets, which are inserted into the audio signal and MIDI data packets, are produced in the karaoke information data packet producing unit 340.

Referring to Figure 4, the lyric data packet includes a 16- bit lyric synchronization word, 16-bit duration information, lyric data which may be of variable length, and a 16-bit end synchronization word.

The 16-bit lyric synchronization word is included in the first 16 bits of a lyric data packet. 16 bits is long enough for a start code and the probability of false detection is very low. The lyric synchronization word indicates that when the energy of the signal is intermediate or high, the lyric data will be inserted into the least significant one or two bits of the PCM sample. In the present embodiment, the lyric synchronization word is inserted in the least significant one bit of the PCM sample even when the energy level is high. Therefore, when decoding the lyric data packet, the decoder will know how the lyric data packet was encoded.

16 bit duration information data is inserted after the lyric synchronization word. The number of samples to be bit-robbed and the current lyric data packet indicate the duration of the bit-robbing.

The duration information takes into account the situation when bit-robbing is not performed on the samples because all the predetermined karaoke information has been inserted. Therefore, no more information is inserted even when the energy is at an intermediate or high level. In this embodiment, the duration information data is inserted in the least significant one bit of the PCM sample.

It is possible to insert karaoke information and to reproduce karaoke information without determining the energy level in the encoder and decoder unit by using duration information and inserting karaoke information using the bits selected by sub-audio block units, for example, the least significant bit. Furthermore, the valid duration of the current lyrics data, which is included in the duration information, enables the highlighting of the lyrics of the current location being replayed on the karaoke screen.

Lyric data is inserted into the least significant one or two bits of the PCM sample when the energy level is intermediate or high. In one present embodiment, when the energy level is high, the lyric data is inserted into the least significant two bits. However, as an option, it is possible to use only one least significant bit. The 16-bit end synchronization word indicates that all of the lyric data packets have been inserted.

One advantage of the information insertion method using bit-robbing according to the present embodiment is that synchronization with audio data is guaranteed. By inserting lyric data into bit-robbed bits, that is, by adding lyrics information to audio data itself, lyrics have the advantage of being inserted into the audio stream without having to take into account problems relating to audio synchronization when displaying the lyrics.

If a separate data channel has to be formed for audio synchronization, it is necessary to use a large number of bits to transmit timing information. Therefore, the information insertion method of the present invention has the advantage of effectively using the channels.

Referring to Figure 5 the format of the MIDI data packet is the same as that of a lyrics data packet except that the duration information data is not included. Duration information is not included separately since it is already included in a different MIDI track in accordance with the MIDI format. Since the MIDI data packet is reproduced simultaneously with audio data, synchronization with audio data is unnecessary. However, MIDI data which needs to be processed before a particular piece of audio data should be inserted into preceding audio data.

As an option, it is possible to randomise the lyric data packet and/or MIDI data packes produced by the karaoke information data packet producing unit 340 and output randomised lyric data packets and/or MIDI data packets to the karaoke information insertion unit 380. The randomised karaoke information data packet inserted into the PCM sample functions as a dither signal for the most significant bit (MSB).

Referring to Figure 6, the karaoke information insertion unit 380 inserts karaoke information received from the karaoke information data packet-generation unit 340 into the audio signal in blocks smaller than the audio sample (sometimes called "sub-audio blocks"). These blocks can also be referred to as PCM sample units. As an example, when the energy level of the current audio block calculated by the energy level determination unit 320 is low, insertion of karaoke information is skipped.

When the energy level of the current audio block classified by the energy level determination unit 320 as being intermediate, karaoke information is inserted into the sub-audio blocks according to a first insertion pattern. For example, the first insertion pattern refers to the method of inserting the data of the lyrics and the MIDI data packet illustrated in FIGS. 4 and 5 using the least significant one bit of the PCM sample of the current audio block.

Furthermore, when the energy level of the audio block is high, karaoke information is inserted into sub-audio blocks according to a second insertion pattern. For example, the second insertion pattern refers to the method of inserting the data of the lyrics and MIDI data packet illustrated in FIGS. 4 and 5 using the least significant two bits of the PCM sample of the current audio block.

When the energy levels of the audio blocks are low for an extended period, karaoke information is inserted according to a third insertion pattern. For example, the third insertion pattern uses the least significant bit among the even numbered PCM samples of the current audio block.

After this the audio data containing the karaoke information data packet is recorded on the audio CD track.

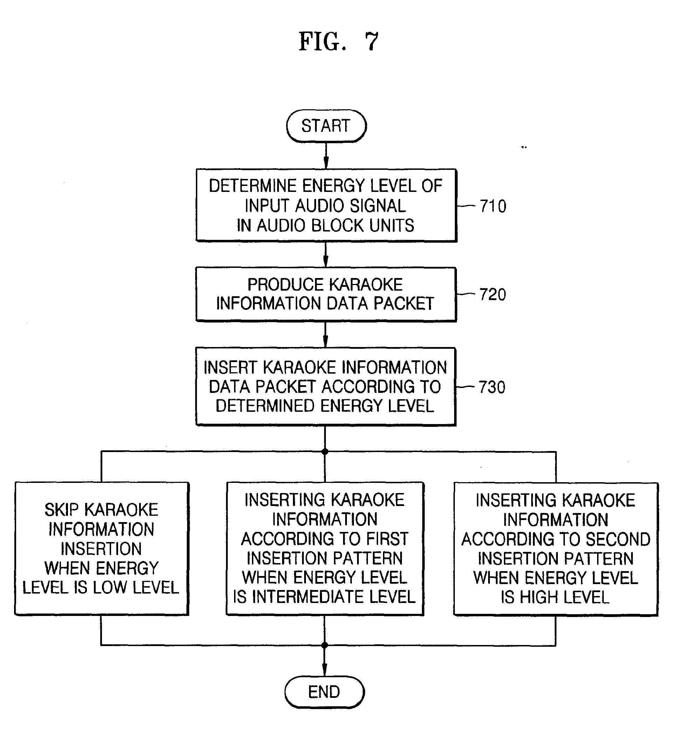

Referring to Figure 7, in step 710, the energy level of the inputted audio signal is determined during a predetermined frame interval. According to one embodiment, the energy level of the audio frame is classified as low, intermediate, or high.

In step 720, karaoke information data packets, which will be inserted into the audio signal, are produced. According to this embodiment, a lyric data packet and a MIDI data packet, which are shown in FIGS. 4 and 5 are produced.

In step 730, taking into account the energy level determined in step 710, the karaoke information data packet produced in step 720 is inserted into the audio signal in sub-audio block units. For example, in step 732 when the energy level of the current audio block is low, insertion of karaoke information is skipped. When the energy level of the current audio block is intermediate, karaoke information is inserted into the audio signal according to the first insertion pattern in step 734. When the energy level of the current audio block is high, the karaoke information is inserted into the audio signal according to the second insertion pattern in step 736.

In this embodiment, the produced karaoke information is inserted into the audio signal without randomisation, however it is possible to insert the karaoke information data packet into the audio signal after the randomising process. When the energy levels of the audio blocks are continuously low for a predetermined period, the karaoke information is inserted into the audio signal according to the third insertion pattern. Next, the audio data in which karaoke information is inserted is recorded to the audio CD track.

The karaoke CD type decoder operates in two modes. In mode 1, the replay of the original audio track and the display of the synchronized lyrics are both performed simultaneously. In mode 2, the replay of the karaoke MIDI file and the display of lyrics are performed simultaneously.

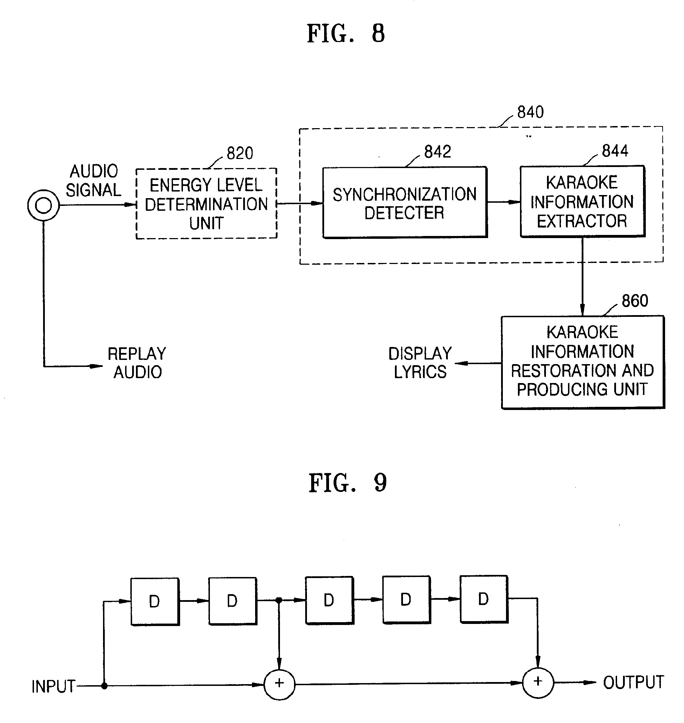

Referring to Figure 8, the karaoke CD decoder measures the energy level of the input signal and performs the same operations as the encoder to determine which of the bits were bit-robbed from the PCM sample by the encoder. The decoder of this embodiment operates in mode 1.

The decoder according to this embodiment includes an energy level determination unit 820, a karaoke information extraction unit 840, and a lyric data restoration and replay unit 860. The karaoke information extraction unit 840 includes a synchronized information detection unit 842 and a karaoke information extraction unit 844. When the insertion pattern of the karaoke information is predetermined, the energy level determination unit 820 may be omitted.

The energy level determination unit 820 calculates the energy level of the input audio signal in audio block units in the same manner as the energy level determination unit 320 of the encoder shown in Figure 3. The calculated energy level is output from the synchronized information detection unit 842.

When the energy level of the current audio block is intermediate or high, the synchronization detector 842 determines whether the synchronization word detected from the PCM sample of the current audio block and the synchronization word inserted in the encoder match. When synchronization words match the result is output to the karaoke information extraction unit 844.

When the energy levels of the predetermined number of audio blocks are continuously low, the synchronized detection unit 842 determines whether the synchronization word detected from the PCM sample of the audio block and the synchronization word inserted in the encoder are identical. When the synchronized words are identical, the result is output to the karaoke information extraction unit 844.

Referring to Figure 9, a feedback shift register extracts bits from the PCM samples, maintains one delay line, descrambles data on the delay line and examines the validity of the synchronization word.

The karaoke information extraction unit 844 extracts duration information and lyric information based on the inputs from the energy level determination unit 820 and synchronized information detection unit 842. For example, when the energy level of the current audio block is intermediate or high, 16 bits of duration information, shown in Figure 4, are extracted from the least significant bit of PCM samples.

Furthermore, when the energy level of the input audio signal is intermediate and the synchronized word is extracted, lyric information is extracted according to the first insertion pattern during the period designated by the duration information. For example, according to the first insertion pattern, lyric information is extracted from the least significant one bit of the PCM samples.

When the energy level of the input audio signal is high and a synchronized pattern is detected, lyric information is extracted according to the second insertion pattern during the period designated by duration information. For example, according to the second insertion pattern, lyrics information is extracted from the least significant two bits of the PCM sample.

When the energy levels of the predetermined number of audio blocks are continuously low and synchronized words are identical, duration information is extracted from the least significant one bit of the PCM samples and lyric information is extracted according to the third insertion pattern. For example, according to the third insertion pattern, lyric information is extracted from the least significant bit of the even-numbered PCM samples of the current audio block.

The karaoke information restoration and replay unit 860 uses the duration information and lyric information extracted by the karaoke information extraction unit 844 to display the lyrics for a predetermined period. The karaoke information restoration and replay unit 860 includes a buffer (not shown) for buffering lyric information extracted from the karaoke information extraction unit 844.

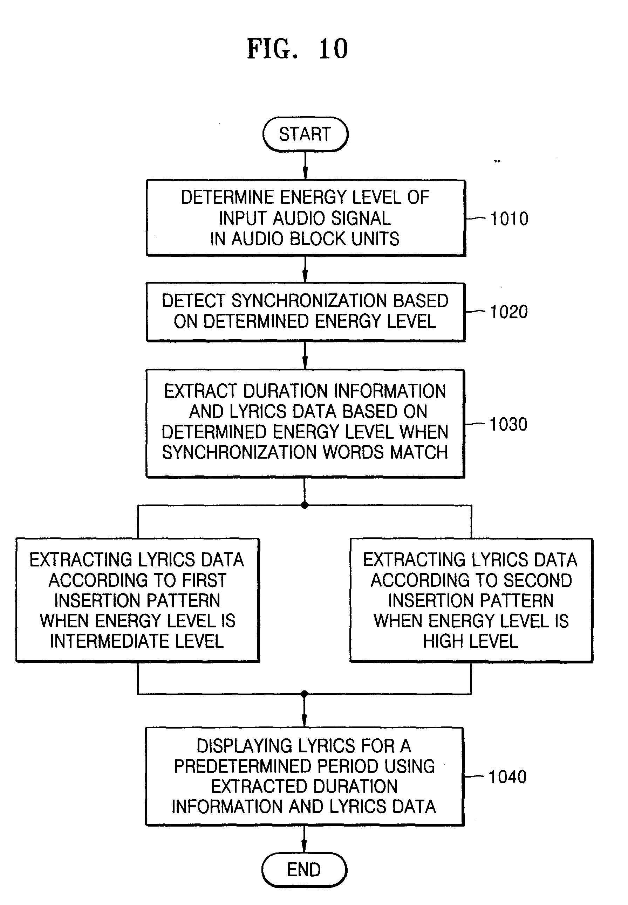

Referring to Figure 10, in step 1010, the energy level of the input audio signal is determined by audio block units, which have predetermined lengths.

In step 1020, synchronized information is extracted based on the energy level determined in step 1010. In one embodiment, when the determined energy level is intermediate or high, it is determined whether the synchronized information matches the synchronized word input to the encoder.

When the energy levels of the predetermined number of audio blocks are continuously low, the synchronized word is extracted from the PCM samples of the current audio block and it is determined whether the synchronization word matches the synchronized word input to the encoder. In step 1030, when the synchronized words are identical, duration information and lyric information are extracted based on the energy level determined in step 1010. For example, when the energy level of the current audio block is intermediate or high, the 16-bit duration information, which is shown in Figure 4, is extracted from the least significant one bit of the PCM samples of the audio block.

Furthermore, when the energy level of the current audio block is intermediate, lyric information is extracted according to the first insertion pattern (step 1032) during the period designated by the duration information. When the energy level of the current audio block is high, the lyric information is extracted according to the second insertion pattern (step 1034). This is done during the period designated by the duration information. When the energy levels of the predetermined number of audio blocks are low for a predetermined period, and, synchronized patterns are identical, duration information is extracted from the least significant one bit of the PCM sample and lyrics information is extracted according to the third insertion pattern.

In step 1040, lyrics are displayed for a period defined by the extracted duration information and lyric information. Lyrics are replayed from the audio CD in conjunction with the original audio.

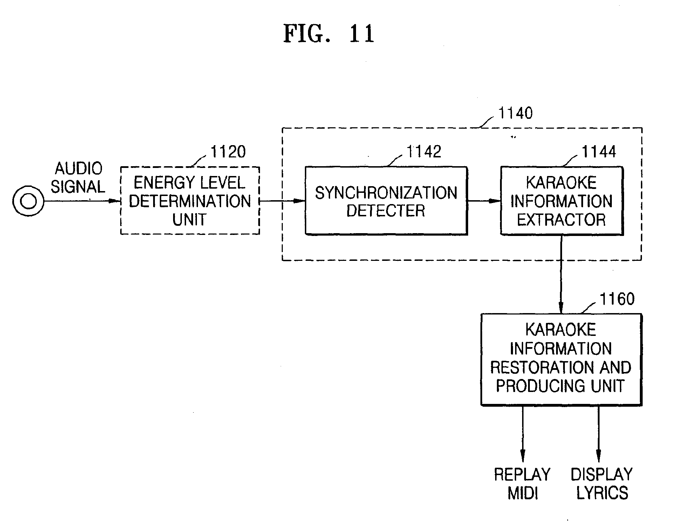

Referring to Figure 11, the decoder according to an embodiment includes an energy level determination unit 1120, a karaoke information detection unit 1140 and a karaoke information restoration and replay unit 1160. The karaoke information detection unit 1140 includes a synchronized information detection unit 1142 and karaoke information extraction unit 1144. When the insertion pattern of the karaoke information is already known by the decoder, the energy level determination unit 1120 can be omitted.

A description will now follow of the decoder according to the present embodiment operating in mode 2.

The components illustrated in Figure 11 perform the same operations those in Figure 8 except that the karaoke information extraction unit 1144 extracts lyric information and MIDI data. Also, the additional data restoration and replay unit 1160 simultaneously replays lyrics data and MIDI data. A detailed description of common components will be skipped for the sake of brevity.

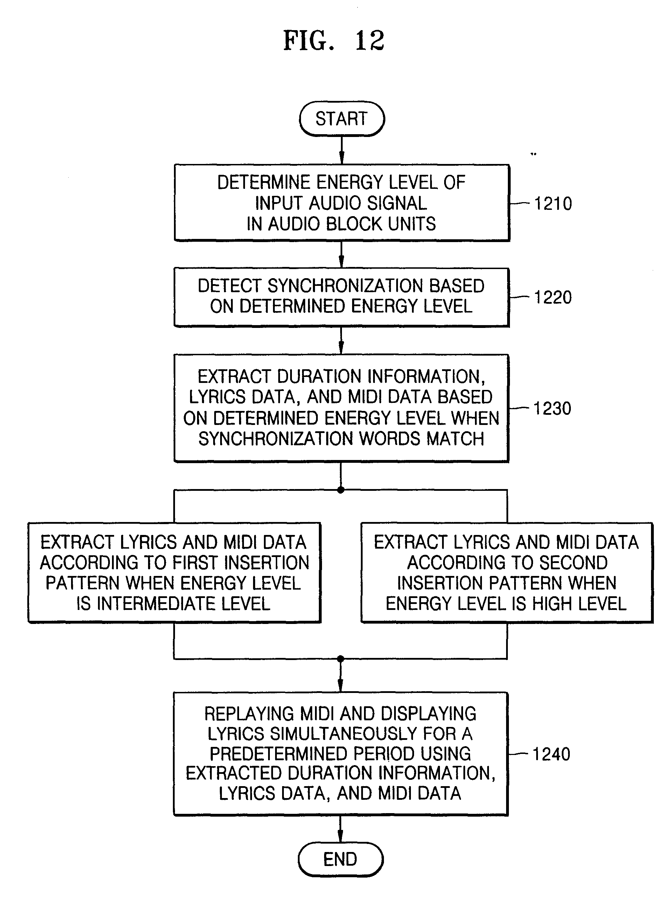

The steps 1210 and 1220 illustrated in Figure 12 are the same as the steps in Figure 11. However, in steps 1230, 1232 and 1234 lyric information and MIDI data are extracted, and in step 1240 lyric data and MIDI data are replayed simultaneously.

The present invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, hard discs, floppy discs, flash memory, and optical data storage devices. The recording medium can also be in carrier wave form (e.g., transmission through the Internet). The computer readable recording medium can also be distributed over network coupled computer systems so that the computer readable code is stored and executed in a distributed fashion.

Since the karaoke information insertion method according to the described embodiments adaptively insert karaoke information into audio data itself using a bit-robbing method whereby the number of bits used depends on the energy level of the input audio signal, insertion of karaoke information without deterioration of audio sound quality is possible. In addition, since a separate channel is not needed, channels can be effectively used, and since there is no need to decode separate channel information, the structure of the decoder can be simplified. Moreover, compatibility with general CD players is ensured.

## Claims

1. A method of inserting non-audio data into audio data having a plurality of audio data blocks, the method comprising, determining the number of bits available for changing in each of said blocks in accordance with a criterion, and inserting non-audio data in at least part replacement thereof.

2. A method according to claim 1, wherein the insertion of the non-audio data is inserted over a predetermined number of audio data blocks.

3. A method according to either one of claim 1 or 2, comprising determining the energy level of a signal carrying said audio data, and determining said criterion in accordance therewith.

4. A method of extracting non-audio data inserted into a plurality of audio data blocks using the method of any one of claims 1, 2 or 3, the method of extracting comprising, removing a defined number of non-audio synchronisation data bits from each of said blocks, and in accordance with the removed non-audio synchronisation data bits, extracting non-audio data from each non-audio data block.

5. A method of adaptively inserting karaoke information into input audio data, the method comprising inserting karaoke information into input audio data in sub-audio block units,
wherein the karaoke information comprises duration information and karaoke data, and the duration information indicates a range of the sub-audio block units in which the karaoke information is inserted.

6. The method of claim 1, wherein the karaoke information comprises a lyrics data packet comprising synchronization information, the duration information and the lyrics data packet, and the karaoke data is lyrics data related to the audio data.

7. The method of claim 1, further comprising:
determining energy levels of audio block units by calculating energy of the audio data in the audio block units, each of the audio block units comprising a predetermined number of the sub-audio block units; and
determining an insertion pattern used to insert the karaoke information into the sub-audio block units according to a determined energy level.

8. The method of claim 3, wherein the insertion pattern is information related to the number of bits and/or bit location of the sub-audio block units used to insert the karaoke information.

9. The method of claim 3, further comprising:
inserting the karaoke information according to a first insertion pattern when energy of a current audio block is greater than a first reference value and less than a second reference value; and
inserting the karaoke information according to a second insertion pattern when the energy of the current audio block is greater than the second reference value;
wherein the amount of the karaoke information inserted according to the second insertion pattern is greater than the amount of the karaoke information inserted according to the first insertion pattern, and the second reference value is larger than the first reference value.

10. The method of claim 3, further comprising determining a length of the audio block units according to the input audio data.

11. The method of claim 3, wherein the sub-audio block units are pulse code modulation samples.

12. The method of claim 1, wherein the karaoke information inserted into the audio data further comprises a musical instrument digital interface data packet comprising synchronization information and MIDI data.

13. The method of claim 3, wherein, when the energy levels of the audio block units are continuously lower than a first reference value, the karaoke information is inserted using a least significant bit of the sub-audio block units.

14. An apparatus for inserting karaoke information into input audio data, the apparatus comprising:
a karaoke information insertion unit inserting karaoke information into the input audio data in sub-audio block units; and
wherein the karaoke information comprises duration information and karaoke data and the duration information indicates a range of the sub-audio block units in which the karaoke information is inserted.

15. The apparatus of claim 10, wherein the karaoke information comprises a lyrics data packet comprising synchronization information, the duration information, and the karaoke data which is lyrics data related to the audio data.

16. The apparatus of claim 10, further comprising an energy level determination unit which calculates energy of the audio data by audio block units of the auto data, each of the audio block units comprising a predetermined number of the sub-audio block units, and which compares the calculated energy with a predetermined standard value, and determines an insertion pattern to be used to insert the karaoke information into the sub-audio block units.

17. The apparatus of claim 12, wherein the insertion pattern is information related to at least one of a number of bits and bit location of the sub-audio block units used to insert karaoke information.

18. The apparatus of claim 12, wherein, when the energy of a current audio block is greater than a first reference value and less than a second reference value, the karaoke insertion unit inserts the karaoke information according to a first insertion pattern, and when the energy of the current audio block is greater than the second reference value the karaoke insertion unit inserts the karaoke information according to a second insertion pattern, and the amount of karaoke information inserted according to the second insertion pattern is greater than the amount of karaoke information inserted according to the first insertion pattern, and the second reference value is greater than the first reference value.

19. The apparatus of claim 12, further comprising a standard block length determination unit which determines a length of the audio block units according to the input audio data.

20. The apparatus of claim 12, wherein the sub-audio block units are pulse code modulation samples.

21. The apparatus of claim 10, wherein the karaoke information inserted into the audio data further comprises a MIDI data packet comprising synchronization information and MIDI data.

22. The apparatus of claim 12, wherein the karaoke information insertion unit uses the least significant bit of the sub-audio block units to insert the karaoke information when the energy levels of the audio block units are continuously lower than a first reference value.

23. A method of reproducing karaoke information inserted into input audio data information, the method comprising:
detecting synchronization information from the input audio data;
extracting duration information of sub-audio block units when the detected synchronization information is valid; and
extracting karaoke data from the sub-audio block units based on the extracted duration information;
wherein the karaoke information comprises the duration information and the karaoke data and the duration information indicates a range of the sub-audio block units in which the karaoke information is inserted.

24. The method of claim 19, wherein the karaoke information includes a lyrics data packet comprising synchronization information, the duration information and the karaoke data, and wherein the karaoke information is lyrics data related to the audio data.

25. The method of claim 19, further comprising:
determining an energy level in audio block units by calculating energy of the audio data of the audio block units, each of the audio block units comprises a predetermined number of the sub-audio block units, and comparing the calculated energy with a predetermined standard value; and
determining an insertion pattern used to insert the karaoke information into the sub-audio block units based on the determined energy level.

26. The method of claim 21, wherein the insertion pattern is information related to at least one of a number of bits and bit location of the sub-audio block units used to insert the karaoke information.

27. The method of claim 21, further comprising:
extracting the karaoke information according to a first insertion pattern when energy of a current audio block is greater than a first reference value and less than a second reference value; and
extracting the karaoke information according to a second insertion pattern when the energy of the current audio block is greater than the second reference value;
wherein the amount of the karaoke information extracted according to the second insertion pattern is greater than the amount of karaoke information extracted according to the first insertion pattern, and the second reference value is greater than the first reference value.

28. The method of claim 21, further comprising determining a length of the audio block units according to the input audio data.

29. The method of claim 21, wherein the sub-audio block units are pulse code modulation samples.

30. The method of claim 19, wherein karaoke information is extracted from the audio data and comprises an MIDI data packet including synchronization information and a MIDI packet.

31. The method of claim 21, wherein, when the energy levels of a predetermined number of audio blocks are continuously less than a first reference value, karaoke information is extracted using a least significant bit of the sub-audio block.

32. An apparatus for reproducing karaoke information inserted into input audio data, the apparatus comprising:
a synchronization detection unit which detects synchronization information from the input audio data; and
a karaoke information detection unit which extracts duration information from sub-audio block units and extracts karaoke data from the sub-audio block units based on the extracted duration information;
wherein the karaoke information includes the duration information and the karaoke data, and the duration information indicates a range of the sub-audio block units in which the karaoke information is included.

33. The apparatus of claim 28, wherein the karaoke information includes a lyrics data packet comprising synchronization information, the duration information and the karaoke data, and the karaoke information is lyrics data related to the audio data.

34. The apparatus of claim 28, further comprising:
an energy level determination unit which determines energy levels of audio block units by calculating energy of the audio data in the audio block units, each of the audio block units comprising a predetermined number of the sub-audio block units; and
an insertion pattern determination unit which determines an insertion pattern used to insert the karaoke information into the sub-audio block units based on the determined energy level.

35. The apparatus of claim 30, wherein the inserted pattern is information related to at least one of a number of bits and bit location of the sub-audio block units used to insert the karaoke information.

36. The apparatus of claim 30, further comprising a karaoke information extraction unit extracting the karaoke information according to a first insertion pattern when the energy of a current audio block of the audio block units is greater than a first reference value and less than a second reference value, and extracting the karaoke information according to a second insertion pattern when the energy of the current audio block is greater than the second reference value, wherein the size of the karaoke information extracted according to the second insertion pattern is greater than the size of the karaoke information extracted according to the first insertion pattern and the second reference value is greater than the first reference value.

37. The apparatus of claim 30, further comprising a standard block length determination unit which determines a length of the audio block units according to the input audio data.

38. The apparatus of claim 33, wherein the sub-audio block units are pulse code modulation samples.

39. The apparatus of claim 28, wherein the karaoke information is extracted from the audio data and comprises an MIDI data packet including synchronization information and MIDI data.

40. A computer readable recording medium storing a program for inserting karaoke information into input audio data, the program comprising inserting karaoke information into input audio data in sub-audio block units,
wherein the karaoke information comprises duration information and karaoke data, and the duration information indicates a range of the sub-audio block units in which the karaoke information is inserted.

41. The computer readable recording medium of claim 36, wherein the karaoke information comprises synchronization information, duration information, and karaoke data in which the lyrics data packet is related to the audio data.

42. The computer readable recording medium of claim 36, wherein the program further comprises:
determining an energy level in the audio block units by calculating energy of audio data in the audio block units, each of the audio block units comprising a predetermined number of the sub-audio block units and comparing the calculated energy with a predetermined standard value; and
determining an insertion pattern used to insert the karaoke information into the sub-audio block units according to the determined energy level.

43. The computer readable recording medium of claim 38, wherein the insertion pattern is information related to a number of bits and/or bit location of the sub-audio block units used to insert the karaoke information.

44. The computer readable recording medium of claim 38, wherein the program further comprises:
inserting the karaoke information according to a first insertion pattern when energy of a current audio block of the audio block units is greater than a first reference value and less than a second reference value;
inserting the karaoke information according to a second insertion pattern when the energy of the current audio block is greater than the second reference value; and
wherein the amount of the karaoke information inserted according to the second insertion pattern is greater than the amount of the karaoke information inserted according to the first insertion pattern, and wherein the second reference value is larger than the first reference value.

45. The computer readable recording medium of claim 38, wherein, when an energy level of a predetermined number of the audio block units are continuously lower than a first reference value the karaoke information is inserted using a least significant bit of the sub-audio block units.

46. A computer readable recording medium storing a program for reproducing karaoke information inserted into input audio data, the program comprising:
extracting synchronization information from input audio data;
extracting duration information in sub-audio block units with a predetermined length when the extracted synchronization information is valid; and extracting karaoke data from the sub-audio block units based on the extracted duration information;
wherein the karaoke information comprises the duration information and the karaoke data and the duration information indicates a range of sub-audio block units in which the karaoke information is inserted.

47. The computer readable recording medium of claim 42, wherein the karaoke information includes a data packet formed of synchronization information, the duration information, and karaoke data, and the karaoke data is lyrics data related to audio data.

48. The computer readable recording medium of claim 42, wherein the program further comprises:
determining energy levels in audio block units by calculating energy of the audio data of the audio block units, each of the audio block units comprises a predetermined number of the sub-audio block units and comparing the calculated energy with a predetermined standard value; and
determining an insertion pattern used to insert the karaoke information into the sub-audio block units based on the determined energy level.

49. The computer readable recording medium of claim 44, wherein the insertion pattern is information related to a number of bits and/or bit location of the sub-audio block units used to insert the karaoke information.

50. The computer readable recording medium of claim 44, wherein the program further comprises:
extracting the karaoke information according to a first insertion pattern when energy of a current audio block of the audio block units is greater than a first reference value and less than a second reference value; and
extracting the karaoke information according to a second insertion pattern when the energy of the current audio block is greater than the second reference value; and
wherein the amount of the karaoke information extracted according to the second insertion pattern is greater than the amount of the karaoke information extracted according to the first insertion pattern, and the second reference value is larger than the first reference value.

51. The computer readable recording medium of claim 44, wherein when the energy levels of a predetermined number of the audio block units are continuously less than a first reference value, the karaoke information is extracted using a least significant bit of the sub-audio block units.
